# EUROPÄISCHE PATENTSCHRIFT

(11) **EP 1 762 436 B1**
(45) Veröffentlichungstag und Bekanntmachung des Hinweises auf die Patenterteilung: **21.01.2009**
(21) Anmeldenummer: 06018508.9
(22) Anmeldetag: 05.09.2006
(51) Int. Cl.: B60R 11/00, B60K 15/07

(54) **Omnibus mit einem auf seinem Dach anbringbaren Dachaufsatz**
Omnibus with a roof extension mountable on its roof.
Omnibus avec lanterneau posable sur son toit

(30) Priorität: 10.09.2005 DE 102005043123
(43) Veröffentlichungstag der Anmeldung: 14.03.2007
(73) Patentinhaber: MAN Nutzfahrzeuge Aktiengesellschaft, 80976 München (DE)
(72) Erfinder: Salzer, Karlheinz, 94522 Wallersdorf (DE); Vana, Christian, 1030 Wien (AT)

(56) Entgegenhaltungen:
- EP-A2- 1 145 892
- JP-A- 2000 127 860
- JP-A- 2000 190 874
- JP-A- 2000 225 855
- US-B1- 6 367 573

## Beschreibung

Die Erfindung betrifft einen Omnibus mit einem auf seinem Dach anzubringenden Dachaufsatz.

Aus der EP 1145892 A2 ist ein Gas- oder Trolleybus mit einem auf dem Dach des Busses anzubringenden Dachaufsatz bekannt, der als Kernstück eine räumliche Tragstruktur mit einem nach oben offenen, von oben her zugänglichen Innenraum definierter Größe und Form aufweist, in den je Fahrzeugtyp unterschiedliche Fahrzeugteile wie eine Innenwanne und/oder Betriebsmittelbehälter, Steuer-, Regel- und/oder sonstige Geräte eingebaut sind. Des Weiteren umfasst der Dachaufsatz eine die räumliche Tragstruktur mit den eingebauten Fahrzeugteilen von oben her abdeckende Haube. Die räumliche Tragstruktur setzt sich aus einem in sich fachwerkartig gestalteten und verstrebten Bodengerippe und einem oben auf diesem umlaufenden Außenwandgerippe zusammen. Dabei weist die Tragstruktur zwei untere gerade Längsholme als Teile des Bodengerippes und zwei obere gerade Längsholme als Teile des Außenwandgerippes auf, wobei der Abstand der beiden oberen Längsholme zueinander geringer als jener der unteren Längsholme ist und die vier Längsholme parallel zueinander verlaufen und so die Längskanten einer im Querschnitt etwa trapezförmigen Tragstruktur mit umbautem, etwa kubischem Innenraum bilden. Auf diese Weise ist für jeden Bus-Typ (Gas- oder Trolleybus) als Dachaufsatz eine vorgefertigte Einheit geschaffen, die auf dem Dach des Omnibusses anzubringen ist.

Des Weiteren ist aus der DE 3743804 A1 ein gasbetriebener Omnibus bekannt, auf dessen Dach sich eine Senke befindet, in der ein Trägerrahmen mit darin befestigten Gasdruckbehältern eingebaut ist. Da der Trägerrahmen mit den Gasbehältern weitgehend in der Senke verschwindet, ist keine Abdeckung vorgesehen. Dies bringt Probleme bei Niederschlägen, z. B. betreffend die Abführung von Regenwasser aus der Senke. Außerdem sind die Gasdruckflaschen ungeschützt der Sonneneinstrahlung ausgesetzt. Ferner verteuert die Senke die Herstellkosten des Omnibusses. Die Senke reduziert in ihrem Bereich außerdem die Steh- und Gehhöhe im Innenraum des Busses.

Bei des Weiteren gebauten LPG-Bussen waren die notwendige Gasauffangwanne und eine Abdeckhaube ebenfalls als eigenständige Gebilde mit in sich im Hinblick auf Festigkeit, Tragfähigkeit und Formbeständigkeit strukturierten Wänden ausgebildet, welche Teile ebenfalls auf einem ebenen Traggestell montiert wurden. Diese Bauart ist vergleichsweise teuer, auch deren hohes Gewicht verursachte gewisse Probleme. Ähnliche Probleme traten auch bei herkömmlich gebauten Trolleybussen bei der dachseitigen Anbringung von entsprechenden Steuer-, Regel- oder sonstigen Geräten auf. Ein in sich wandseitig strukturierter kistenartiger Behälter, der diese Geräte aufnahm, erforderte aus ästhetischen Gründen eine zusätzliche, ebenfalls in sich wandseitig strukturierte Abdeckung, die auf entsprechenden Lagerelementen zu montieren war.

Es ist daher Aufgabe der Erfindung, für Omnibusse unterschiedlichen Typs eine weitgehend einheitliche Vorrichtung zur Lagerung von Fahrzeugteilen auf dem Dach zu schaffen, die einfach und kostengünstig herstellbar sowie montierbar ist und gegenüber vergleichbaren Vorrichtungen eine nennenswerte Gewichtsersparnis erbringt.

Diese Aufgabe ist erfindungsgemäß durch einen Omnibus mit einem im Kennzeichen des Anspruchs 1 merkmalsmäßig definiertem Dachaufsatz gelöst.

Vorteilhafte Ausgestaltungen und Weiterbildungen der Erfindung sind in den Unteransprüchen angegeben. Da deren Merkmale ihre Stütze in der Figurenbeschreibung haben, ist an dieser Stelle auf deren wörtliche Zitierung verzichtet.

Die Vorteile der erfindungsgemäßen Lösung liegen eindeutig auf der Hand. Der Dachaufsatz ist aus günstig und einfach zusammenzubauenden Teilen herstellbar und auch an einem gut zugänglichen Arbeitsplatz mit den in ihn je Omnibus-Typ einzubauenden Fahrzeugteilen wie Gasbehältern mit Anschlüssen und Leitungen und/oder Steuer-, Regel oder sonstigen Geräten auszustatten. Die Gewichtseinsparung ergibt sich dadurch, dass bei der erfindungsgemäßen Lösung nur der im Querschnitt etwa U-förmige Trägerrahmen im Hinblick auf entsprechende Tragfähigkeit, Festigkeit und Formstabilität strukturiert sein muss. Da die Außenseiten der beiden Trägerrahmen-Außenwände bereits als nicht mehr nachzubehandelnde Sichtflächen ausgebildet sind, kann man sich seitliche Abdeckorgane, die bisher aus Designgründen notwendig waren, ersparen.

Da an dem erfindungsgemäßen Dachaufsatz auch schon alle Anschlusselemente für den späteren Anbau am Omnibusdach, außerdem auch am Dach bzw. Dachgerippe des Omnibusses die diesbezüglichen Gegenelemente schon vorbereitet sind, ist eine vergleichsweise schnelle und einfache Montage des Dachaufsatzes auf dem Omnibus durchführbar. Der erfindungsgemäße Dachaufsatz lässt sich als Standardbauteil für die verschiedensten Arten und Größen von Omnibussen verwenden und begünstigt auch eine Vorratshaltung als Ersatzteil.

Nachstehend ist die erfindungsgemäße Lösung anhand mehrerer in der Zeichnung dargestellter Ausführungsbeispiele noch näher erläutert. In der Zeichnung zeigen:
- Fig. 1: einen mit LPG betreibbaren Gas-Omnibus mit einem erfindungsgemäßen Dachaufsatz schematisch in Explosionsdarstellung,
- Fig. 2: einen Trolley-Gelenkbus mit zwei erfindungsgemäßen Dachaufsätzen, einen für den Vorderwagen und einen für den Nachläufer, schematisch in Explosionsdarstellung,
- Fig. 3: einen (Teil-)Querschnitt durch einen erfindungsgemäßen Dachaufsatz für einen mit LPG betreibbaren Gas-Omnibus,
- Fig. 4: einen Schnitt durch die Darstellung von Fig. 3 entlang der dortigen Schnittlinie IV-IV,
- Fig. 5: einen (Teil-)Querschnitt durch einen erfindungsgemäßen Dachaufsatz für einen mit CNG betreibbaren Gas-Omnibus,
- Fig. 6: einen Schnitt durch die Darstellung von Fig. 5 entlang der dortigen Schnittlinie VI-VI,
- Fig. 7: einen (Teil-)Querschnitt durch einen erfindungsgemäßen Dachaufsatz für einen Trolleybus,
- Fig. 8: einen Schnitt durch die Darstellung von Fig. 7 entlang der dortigen Schnittlinie VIII- VIII.

In den Figuren sind gleiche bzw. einander entsprechende Bauteile mit gleichen Bezugszeichen angezogen.

Die Erfindung bezieht sich auf Omnibusse mit gegenüber herkömmlichen dieselmotorischen alternativen Antrieben, wie Omnibusse mit Motoren, die mit LPG (liquid petrol gas) oder CNG (compressed natural gas) oder H₂ (Wasserstoff) betrieben werden, oder Brennstoffzellenbusse, oder Trolleybusse mit Elektromotoren als Antrieb.

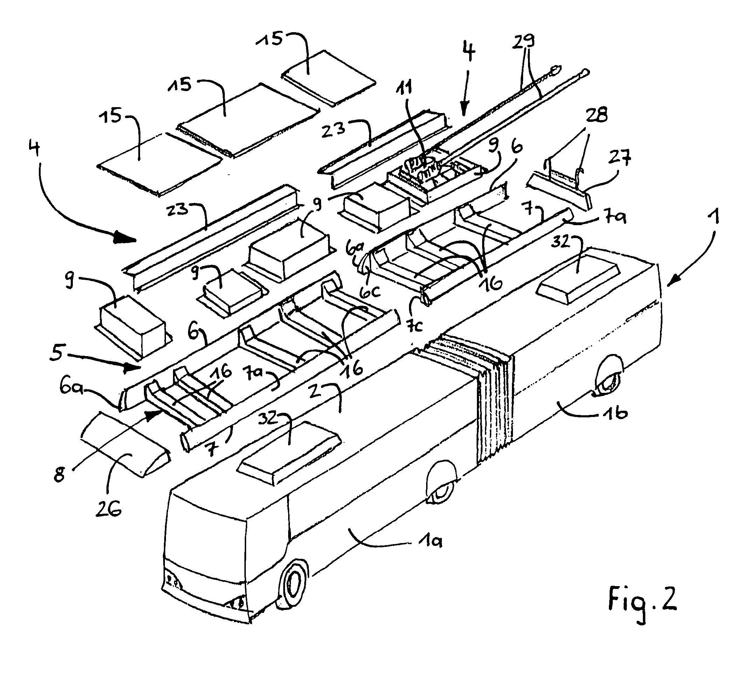

In den Ausführungsbeispielen der Zeichnung ist ein Omnibus generell mit 1 bezeichnet. Im Fall von Fig. 2 ist bei dem dortigen Trolley-Gelenkomnibus der Vorderwagen mit 1 a und der Nachläufer bzw. Hinterwagen mit 1b bezeichnet. Von einem solchen Omnibus 1 interessieren im Zusammenhang mit der Erfindung nur dessen Dach 2 und das Omnibusgerippe 3 im Dachbereich.

Auf dem Omnibus-Dach 2 ist ein Dachaufsatz 4 erfindungsgemäßer Art anzubringen. Dieser Dachaufsatz 4 weist einen universellen, das heißt, für alle unterschiedlichen alternativen Omnibusarten - wie vorstehend erläutert - gleich bleibenden Trägerrahmen 5 mit einem etwa U-förmigen Querschnitt auf. Dieser Trägerrahmen 5 setzt sich aus zwei zueinander parallelen tragenden Außenwänden 6, 7 und einem diese Außenwände in deren unterem Bereich verbindenden Bodengerippe 8 zusammen. Die Außenwände 6, 7 des Bodengerippes 8 sind dabei einerseits auf ihre Tragfunktion, also hinreichend stabil ausgelegt, andererseits weisen sie aber als Außenseiten 6a, 7a schon an das Omnibus-Design angepasste Sichtflächen auf. Das Bodengerippe 8 ist lagestabilisierend für die beiden Außenwände 6, 7 sowie zur Aufnahme und Befestigung von Fahrzeugteilen ausgebildet. Bei diesen je nach Bus-Typ (Gas-, Wasserstoff-, Brennstoffzellen- oder Trolleybus) unterschiedlichen Fahrzeugteilen kann es sich um eine oder mehrere Innenwanne(n) oder eine oder mehrere Kiste(n) 9, in die Steuer-, Regel- oder sonstige für den Betrieb des Omnibusses notwendige Geräte 11 eingebaut sind, oder Betriebsmittelbehälter 10 wie CNG-Druckbehälter oder LPG-Druckbehälter oder Wasserstoffkryodruckbehälter handeln. Diese Fahrzeugteile 9, 10, 11 sind in den Raum 12 zwischen den beiden Außenwänden 6, 7 des Trägerrahmens 5 eingebaut und auf dem Bodengerippe 8 mittelbar befestigt. Der Dachaufsatz 4 ist isoliert vom Omnibus 1 herzustellen und fertig zu montieren. Im Endzustand sind darin auch bereits alle Fahrzeugteile 9, 10, 11 leitungsmäßig sowie steuer- und regelungstechnisch verknüpft. Der vormontierte Dachaufsatz 4 wird mittels eines Kranes oder Hebezeuges auf das Omnibus-Dach 2 gehievt, dann dort mit der Unterseite 13 seiner beiden Trägerrahmen-Außenwände 6, 7 - gegebenenfalls unter Bei- bzw. Zwischenlage einer elastischen Dichtung 14 - aufgesetzt und anschließend befestigt.

Nachstehend ist auf Einzelheiten des erfindungsgemäßen Dachaufsatzes 4 näher eingegangen.

Die Außenwände 6, 7 des Trägerrahmens 5 können beispielsweise - wie dargestellt - aus einem Aluminium-Hohlkammer-Strangpressprofil hergestellt sein. Dieses Hohlkammer-Strangpressprofil weist zwischen seiner Außenseite 6a, 7a und Innenseite 6c, 7c fünf durch Zwischenwände voneinander getrennte Hohlkammern 6b, 7b auf. Außerdem weist dieses Hohlkammer-Strangpressprofil unten einen den Wandquerschnitt im Hohlkammerbereich nach innen überragenden Abstütz- und Befestigungsflansch 6d, 7d und oben einen den Wandquerschnitt im Hohlkammerbereich ebenfalls nach innen überragenden Auflage- bzw. Anlageflansch 6e, 7e für einen oder mehrere Deckel 15 auf. Auf Zweck und Art des/der Deckel(s) 15 ist weiter hinten eingegangen.

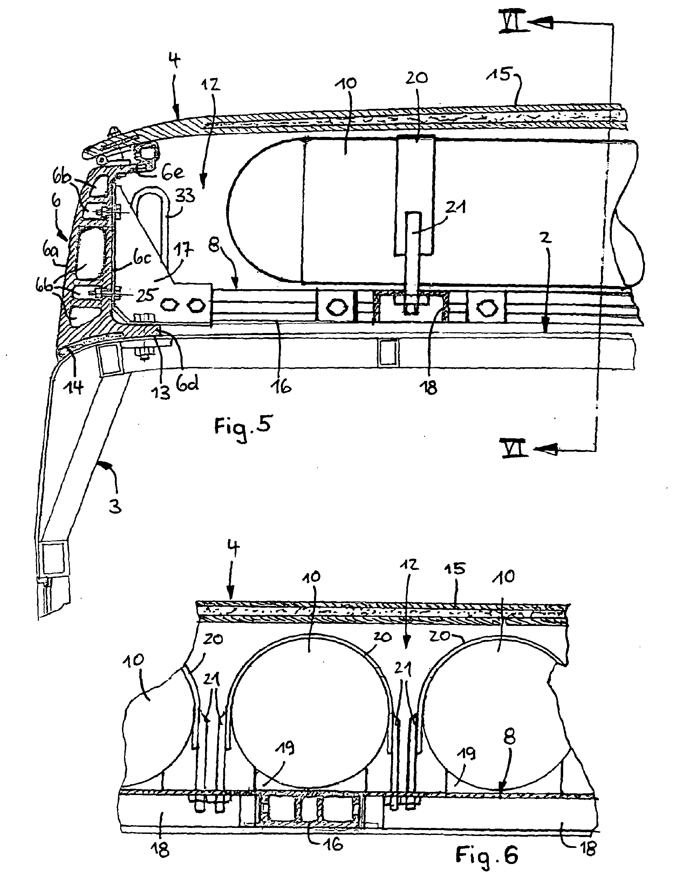

Das sich zwischen den beiden Außenwänden 6, 7 erstreckende Trägerrahmen-Bodengerippe 8 weist mehrere Querträger 16 auf, die vorzugsweise aus Aluminium-Strangpressprofilen hergestellt und an ihren beiden Enden über angepasste, an ihnen befestigte Winkelkonsolen 17 an den Innenseiten 6c, 7c der Außenwände 6, 7 befestigt sind. Die Querträger 16 des Bodengerippes 8 sind für bestimmte Anwendungsfälle, wie z. B. dem Dachaufsatz 4 gemäß Fig. 5, 6 für einen mit CNG-betriebenen Gasbus, in dem die CNG-Druckbehälter 10 quer zur Fahrtrichtung eingebaut sind, durch Längstraversen 18 miteinander verbunden. Diese Längstraversen 18 sind vorzugsweise ebenfalls aus Aluminium-Strangpressprofilen hergestellt und in der gleichen Ebene wie die Querträger 16 angeordnet.

Generell dient das Bodengerippe 8 mit seinen Querträgern 16 und - falls vorhanden - Längsträgern 18 als Auflage- und Befestigungsorgan für die in den Innenraum 12 des Trägerrahmens 5 einzubauenden Fahrzeugteile 9, 10, 11.

Dabei liegen im Fall des Dachaufsatzes 4 für einen mit CNG oder LPG betriebenen Omnibusses die CNG- oder LPG-Druckbehälter 10 über Zwischenelemente 19 auf dem Bodengerippe 8 auf. Befestigt sind die CNG- oder LPG-Druckbehälter 10 mittels Spannbändern 20 und zugehörige Spannschrauben 21 an den Quer- und/oder Längsträgern 16, 18 des Bodengerippes 8.

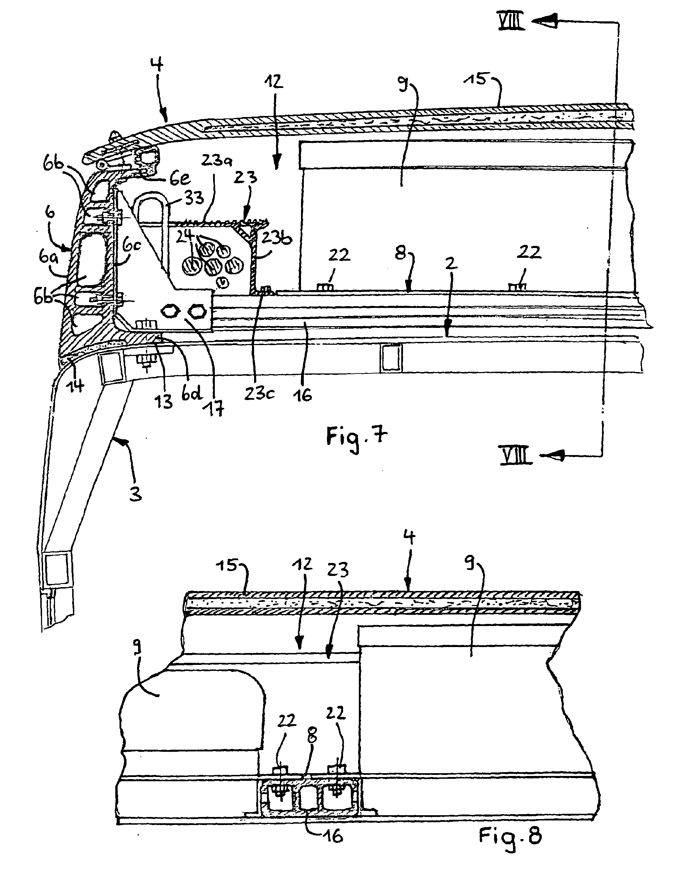

Im Fall des Trolleybusses gemäß Fig. 2, 7 und 8 liegen die Geräte- und/oder Bauteil-Kisten 9 direkt auf dem Bodengerippe 8 auf und sind an dessen Querträgern 16 mittels Schrauben 22 befestigt.

Wie aus Fig. 2, 7 und 8 des Weiteren in Verbindung mit einem Trolleybus ersichtlich, kann sich längs der Innenseite 6c, 7c einer Außenwand 6, 7 des Trägerrahmens 5 ein Winkelprofil 23 erstrecken, das obenseitig einen Laufsteg 23a und ansonsten einen Kanal für innenseitig unter ihm verlegte Kabel- und/oder Gas- bzw. Betriebsmittelleitungen 24 begrenzt. Dieses Winkelprofil 23 ist unten mit einem an seinem Vertikalsteg 23b angeordneten Flansch 23c auf dem Bodengerippe 8 und oben mit einem außen an seinem Laufsteg 23a angeordneten Flansch entweder an der Außenwand-Innenseite 6c, 7c oder der Innenseite der räumlich zugeordneten Winkelkonsolen 17 befestigt.

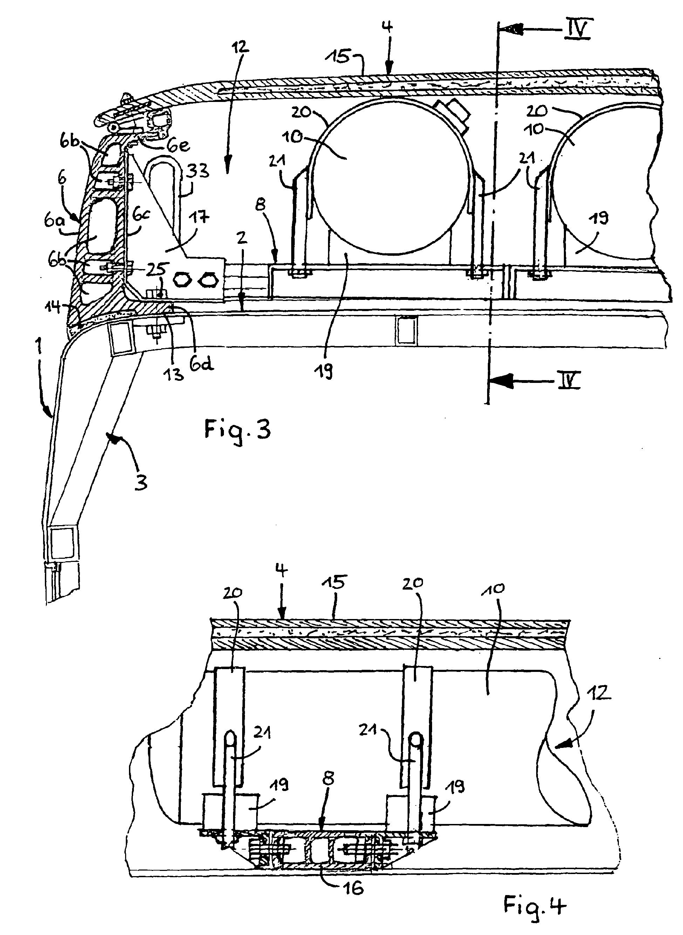

Wie gut aus den Figuren 3, 5 und 7 ersichtlich, sind die Winkelkonsolen 17 oben auf dem Abstütz- und Befestigungsflansch 6d, 7d der jeweiligen Außenwand 6, 7 abgestützt und dort mittels Schraubverbindungen 25 befestigt. Auf diese Weise hat das Bodengerippe 8 im Anbauzustand des Dachaufsatzes 4 einen gewissen Abstand zum Omnibus-Dach 2.

Der Trägerrahmen 5 des Dachaufsatzes 4 kann aus Gründen eines Schutzes der eingebauten Fahrzeugteile und/oder eines vorteilhaften Designs vorne durch eine Stirnwand 26 ergänzt sein. Vorzugsweise ist diese die beiden Außenwände 6, 7 vorne verbindende Stirnwand 26 durch ein vorgefertigtes Kunststoffteil gebildet und nach Art eines Spoilers aerodynamisch gestaltet, so dass anströmender Fahrtwind über den Dachaufsatz 4 hinweg geleitet wird.

Hinten kann der Trägerrahmen 5 des Dachaufsatzes 4 ebenfalls durch eine die beiden Außenwände 6, 7 miteinander verbindende Stirnwand 27 ergänzt sein. Diese Stirnwand 27 kann gleich wie die vordere Stirnwand 26, aber auch unterschiedlich zu dieser ausgebildet sein. Im Fall des Trolley-Gelenkomnibusses von Fig. 2, bei dem zwei verschiedene Dachaufsätze 4 auf dem Dach 2 des Vorderwagens 1 a und des Nachläufers 1 b angebaut werden, sind an der hinteren Stirnwand 27 am Dachausatz 4 des Nachläufers 1 b auch Haltehaken 28 vorhanden, in denen die Stromabnehmerarme 29 in Außerbetriebsposition einhängbar sind.

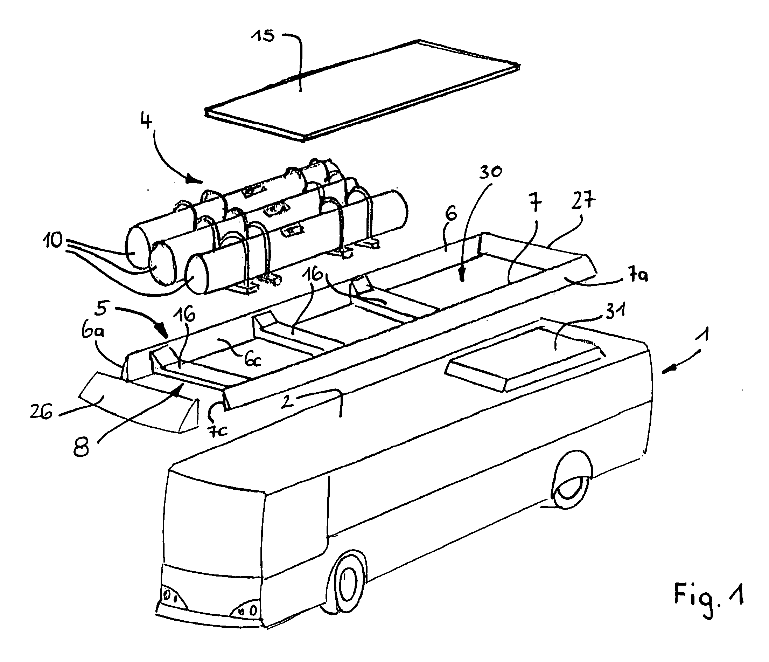

Der Innenraum 12 des Dachaufsatzes 4 kann von oben her zumindest partiell durch einen oder mehrere oben auf den Außenwänden 6, 7 aufgesetzte Deckel 15 abgedeckt sein. Solche Deckel 15 sind vorzugsweise über den in den Innenraum 12 des Trägerrahmens 5 eingebauten Fahrzeugteilen, also den CNG- oder LPG- oder H₂-Druckbehältern 10 (siehe Fig. 1, 3 bis 6) oder den einzelnen Kisten bzw. Behältern 9 mit den darin eingebauten Steuer-, Regel- und sonstigen Geräten eines Trolleybusses (siehe Fig. 2, 7, 8) angeordnet, damit diese Fahrzeugteile witterungsbedingten Niederschlägen nicht direkt ausgesetzt oder gegenüber Steinschlägen geschützt sind.

Es besteht aber auch die Möglichkeit, im Innenraum 12 des Dachaufsatzes witterungsgeschützte Teilräume für besonders kritische Fahrzeugteile vorzusehen. Solche Teilräume sind intern vorn und hinten durch sich zwischen den Außenwänden 6, 7 erstreckende sowie auf bzw. am Bodengerippe 8 befestigte Querwände, oben durch aufgesetzte Deckel 15 und unten nach Anbau des Dachaufsatzes 4 auf dem Omnibus-Dach 2 durch dieses begrenzt, wobei jede solchermaßen entstandene Kiste unten zum Omnibus-Dach 2 hin und oben zwischen Deckel 15 und Trägerrahmen 5 durch zwischengelegte Dichtungen hermetisch abgedichtet sein kann. In solchen geschlossenen Räumen oder Kisten 9 sind insbesondere nässeempfindliche Fahrzeugteile sicher und gut geschützt untergebracht.

Vorzugsweise erstreckt sich der erfindungsgemäße Dachaufsatz 4 nach seinem Anbau auf dem Omnibus-Dach 2 über dessen ganze Breite und im Wesentlichen auch ganze Länge. Beides ist jedoch nicht zwingend notwendig, aber aus Designgründen günstig. Wie gut aus den Figuren 3, 5 und 7 ersichtlich, ist der Dachaufsatz 4 mit den Unterseiten 13 seiner Außenwände 6, 7 an den Außenbereichen des Omnibus-Daches 2 aufgesetzt und mit dem darunter befindlichen Omnibus-Gerippe 3 vorzugsweise über Schraubverbindungen verbunden. Denkbar wäre aber auch eine Verklebung des Dachaufsatzes 4 mit dem Omnibus-Dach 2. Im Falle einer Verklebung oder Zwischenlage einer Dichtung 14 unter alle Außenwände 6, 7, 26, 27 lässt sich so auch eine nach unten zum Dach 2 hin dichte Wanne darstellen, was bei LPG-Bussen zur Sicherheit gegen LPG-Leckagen notwendig ist.

Wie gut aus Fig. 1 oder 2 ersichtlich, können im Bodengerippe 8 des Trägerrahmens 5 fensterartige Bereiche 30 frei bleiben, durch die sich bei im Anbaulage auf dem Omnibus-Dach 2 befindlichem Dachaufsatz 4 eine dachseitig montierte Klimaanlage 31 und/oder Dachlukendeckel 32 hindurch- bzw. hineinerstrecken können. Solche Bereiche sind nicht durch Deckel 15 abgedeckt.

An geeigneten Stellen des Trägerrahmens 5 sind massive Kranbügel 33 vorgesehen, an denen die Kranhaken für das Hochhieven des fertig vormontierten Dachaufsatzes 4 einhängbar sind.

## Patentansprüche

1. Omnibus (1) mit einem auf seinem Dach (2) anzubringenden Dachaufsatz (4), **dadurch gekennzeichnet, dass** der Dauchaufsatz
a) einen universellen, im Querschnitt etwa U-förmigen Trägerrahmen (5) aufweist, der aus zwei zueinander parallelen tragenden Außenwänden (6, 7) und einem diese in ihrem unterem Bereich verbindenden Bodengerippe (8) besteht, wobei
aa) die Außenwände (6, 7) einerseits im Hinblick auf ihre Tragfunktion ausgelegt sind, andererseits aber als Außenseiten (6a, 7a) schon an das Omnibus-Design angepasste Sichtflächen (6a, 7a) aufweisen,
ab) das Bodengerippe (8) lagestabilisierend für die beiden Außenwände (6, 7) sowie zur Aufnahme und Befestigung von Fahrzeugteilen (9, 10, 11) ausgebildet ist,
ac) in den Raum (12) zwischen den beiden Außenwänden (6, 7) je nach Omnibustyp (Gas-, Wasserstoff-, Brennstoffzellen- oder Trolleybus) unterschiedliche Fahrzeugteile wie Innenwanne(n), Kiste(n), Betriebsmittelbehälter, Steuer-, Regel- und/oder sonstige Geräte eingebaut und auf dem Bodengerippe (8) mittelbar befestigt sind, und
b) als fertig vormontierte Baueinheit mit der Unterseite (13) seiner beiden Trägerrahmen-Außenwände (6, 7) - gegebenenfalls unter Beilage einer elastischen Dichtung (14) - auf das Omnibus-Dach (2) aufgesetzt und dort befestigt ist.

2. Omnibus nach Anspruch 1, **dadurch gekennzeichnet, dass** die Außenwände (6, 7) des Trägerrahmens (5) aus einem Hohlkammer-Strangpressprofil, insbesondere Aluminium-Strangpressprofil, hergestellt sind.

3. Omnibus nach Anspruch 2, **dadurch gekennzeichnet, dass** das eine Außenwand (6, 7) bildende Hohlkammer-Strangpressprofil zwischen seiner Außenseite (6a, 7a) und Innenseite (6c, 7c) mehrere, vorzugsweise fünf durch Zwischenwände voneinander getrennte Hohlkammern (6b, 7b) übereinander sowie unten einen den Wandquerschnitt im Hohlkammerbereich nach innen überragenden Abstütz- und Befestigungsflansch (6d, 7d) und oben einen den Wandquerschnitt im Hohlkammerbereich ebenfalls nach innen überragenden Auflage- bzw. Anschlussflansch (6e, 7e) für einen oder mehrere Deckel (15) aufweist.

4. Omnibus nach einem der Ansprüche 1 bis 3, **dadurch gekennzeichnet, dass** das Trägerrahmen-Bodengerippe (8) mehrere Querträger (16) aufweist, die vorzugsweise aus Aluminium-Strangpressprofilen hergestellt und an ihren jeweils beiden Enden über angepasste Winkelkonsolen (17) an den Innenseiten (6c, 7c) der Trägerrahmen-Außenwände (6, 7) befestigt sind.

5. Omnibus nach Anspruch 4, **dadurch gekennzeichnet, dass** die Querträger (16) des Trägerrahmen-Bodengerippes (8) für bestimmte Anwendungsfälle durch Längstraversen (18) miteinander verbunden sind, die vorzugsweise ebenfalls aus Aluminium-Strangpressprofilen hergestellt sind und ebenso wie die Querträger (16) als Auflage- und Befestigungsorgane für in den Trägerrahmen-Innenraum (12) einzubauende Fahrzeugteile (9, 10, 11), wie Betriebsmittel-Behälter, Gerätekisten und dergleichen dienen.

6. Omnibus nach einem der Ansprüche 1 bis 5, **dadurch gekennzeichnet, dass** sich längs der Innenseite einer Außenwand (6, 7) ein Winkelprofil (23) erstreckt, das obenseitig einen Laufsteg (23a) bildet und ansonsten einen Kanal für innenseitig unter ihm verlegte Kabel- und/oder Gas- bzw. Betriebsmittelleitungen begrenzt sowie unten mit einem an seinem Vertikalsteg (23b) angeordneten Flansch (23c) auf dem Bodengerippe (8) und oben mit einem außen an seinem Laufsteg (23a) angeordneten Flansch entweder an der Außenwand-Innenseite (6c, 7c) oder der Innenseite der räumlich zugeordneten Winkelkonsolen (17) befestigt ist.

7. Omnibus nach den Ansprüchen 3 und 4, **dadurch gekennzeichnet, dass** die Winkelkonsolen (17) auf dem Abstütz- und Befestigungsflansch (6d, 7d) der jeweiligen Außenwand (6, 7) abgestützt befestigt sind, mithin das Bodengerippe (8) im Anbauzustand des Dachaufsatzes (4) einen gewissen Abstand zum Omnibus-Dach (2) hat.

8. Omnibus nach einem der vorhergehenden Ansprüche, **dadurch gekennzeichnet, dass** auf den Quer- und/oder Längsträgern (16, 18) des Bodengerippes (8) Adapterstücke (19) für eine formmäßig angepasste Abstützung der darauf zu befestigenden Fahrzeugteile, wie Betriebsmittel-Behälter, Gerätekisten und dergleichen aufgesetzt sind.

9. Omnibus nach Anspruch 1, **dadurch gekennzeichnet, dass** der Trägerrahmen (5) vorne durch eine Stirnwand (26) ergänzt ist, die die beiden Außenwände (6, 7) verbindet und vorzugsweise durch ein vorgefertigtes Kunststoffteil gebildet sowie nach Art eines Spoilers aerodynamisch gestaltet ist.

10. Omnibus nach Anspruch 1, **dadurch gekennzeichnet, dass** der Trägerrahmen (5) hinten durch eine Stirnwand (27) ergänzt ist, die die beiden Außenwände (6, 7) verbindet und vorzugsweise durch ein vorgefertigtes Kunststoffteil gebildet ist.

11. Omnibus nach Anspruch 1, **dadurch gekennzeichnet, dass** der Innenraum (12) des Dachaufsatzes (4) von oben her zumindest partiell durch einen oder mehrere oben auf den Außenwänden (6, 7) aufgesetzte Deckel (15) abgedeckt ist.

12. Omnibus nach Anspruch 1, **dadurch gekennzeichnet, dass** der Innenraum (12) des Dachaufsatzes (4) witterungsgeschützte Teilräume aufweist, in die gegenüber witterungsbedingten Niederschlägen zu schützende Fahrzeugteile und -geräte eingebaut sind, welche Teilräume intern vorn und hinten durch zwischen den Außenwänden (6, 7) auf bzw. am Bodengerippe befestigte Querwände, oben durch aufgesetzte Deckel (15) und unten nach Anbau des Dachaufsatzes (4) auf dem Omnibus-Dach (2) durch dieses begrenzt sind, wobei jede solchermaßen entstandene Kiste unten zum Omnibus-Dach (2) hin und oben zwischen Deckel (15) und Trägerrahmen (5) durch zwischengelegte Dichtungen hermetisch abgedichtet sein kann.

13. Omnibus nach einem der vorhergehenden Ansprüche, **dadurch gekennzeichnet, dass** der Dachaufsatz sich über die ganze Breite und im Wesentlichen die ganze Länge des Omnibus-Daches (2) erstreckt und mit den Unterseiten (13) seiner Außenwände (6, 7) an den Außenbereichen des Omnibus-Daches (2) aufgesetzt und mit dem darunter befindlichen Omnibus-Gerippe (3) verschraubt ist.

14. Omnibus nach einem der vorhergehenden Ansprüche, **dadurch gekennzeichnet, dass** im Bodengerippe (8) des Trägerrahmens (5) fensterartige Bereiche (30) frei bleiben, durch die sich bei in Anbaulage auf dem Omnibus-Dach (2) befindlichem Dachaufsatz (4) eine dachseitige Klimaanlage (31) und/oder Dachlukendeckel (32) hindurch- bzw. hineinerstrecken.

## Claims

1. Bus (1) with a roof extension (4) to be applied on its roof (2), **characterised in that** the roof extension (4)
a) has a universal component carrier (5), with an approximately U-shaped cross-section, that consists of two mutually parallel supporting outer walls (6, 7) and a floor framework (8) that connects said outer walls in their lower area, where
aa) the outer walls (6, 7) are designed in terms of their supporting function, but also, as outer sides (6a, 7a), have visible surfaces (6a, 7a) adapted to the bus design,
ab) the floor framework (8) is designed in a position-stabilising manner for the two outer walls (6, 7) as well as for supporting and fastening vehicle parts (9, 10, 11),
ac) depending on the type of bus (gas, hydrogen, fuel cell or trolley bus), different vehicle parts such as internal pan(s), box(es), operating fluid container(s), control units, regulating units and/or other units are installed in the space (12) between the two outer walls (6, 7) and indirectly fastened to the floor framework (8), and
b) is applied on the bus roof (2) and fastened there as a preassembled structural unit with the underside (13) of its two component carrier outer walls (6, 7) - if applicable with attachment of an elastic seal (14).

2. Bus according to claim 1, **characterised in that** the outer walls (6, 7) of the component carrier (5) are manufactured from a hollow extruded section, in particular an aluminium extruded section.

3. Bus according to claim 2, **characterised in that** the hollow extruded section that forms one outer wall (6, 7) has, between its outer side (6a, 7a) and inner side (6c, 7c), several, preferably five, hollow chambers (6b, 7b), separated from each other by partitions, on top of each other as well as, at the bottom, a supporting and fastening flange (6d, 7d) inwardly overlapping the wall cross-section in the hollow chamber area and, at the top, a bearing and connecting flange (6e, 7e), also inwardly overlapping the wall cross-section in the hollow chamber, for one or more covers (15).

4. Bus according to one of claims 1 to 3, **characterised in that** the component carrier floor framework (8) has several cross members (16) that are preferably manufactured from aluminium extruded sections and fastened at each of their two ends to the inner sides (6c, 7c) of the component carrier outer walls (6, 7) via appropriate angle brackets (17).

5. Bus according to claim 4, **characterised in that**, for specific application instances, the cross members (16) of the component carrier floor framework (8) are connected with each other by means of longitudinal members (18) that are preferably also manufactured from aluminium extruded sections and, like the cross members (16), serve as supporting and fastening devices for vehicle parts (9, 10, 11) to be installed in the component carrier interior (12), such as operating fluid containers, equipment boxes and the like.

6. Bus according to one of claims 1 to 5, **characterised in that** an angle section (23) extends along the inner side of an outer wall (6, 7), which angle section forms a scaffold (23a) at the top and otherwise restricts a channel for cable and/or gas or operating fluid lines installed internally beneath it and is fastened at the bottom to the floor framework (8) with a flange (23c) arranged on its vertical strut (23b) and at the top either to the inner side of the outer wall (6c, 7c) or to the inside of the physically arranged angle brackets (17) with a flange arranged externally on its scaffold (23a).

7. Bus according to claims 3 and 4, **characterised in that** the angle brackets (17) are fastened to the supporting and fastening flange (6d, 7d) of the respective outer wall (6, 7) in a supporting manner, therefore the floor framework (8) has a certain distance from the bus roof (2) in the mounted state of the roof extension (4).

8. Bus according to one of the preceding claims, **characterised in that** adapters (19) for structurally appropriate support of the vehicle parts to be fastened to them, such as operating fluid containers, equipment boxes and the like, are applied on the cross members and/or longitudinal members (16, 18) of the floor framework (8).

9. Bus according to claim 1, **characterised in that** the component carrier (5) is supplemented at the front by a front wall (26) that connects the two outer walls (6, 7) and is preferably formed by a prefabricated plastic part and is aerodynamically designed after the manner of a spoiler.

10. Bus according to claim 1, **characterised in that** the component carrier (5) is supplemented at the rear by a front wall (27) that connects the two outer walls (6, 7) and is preferably formed by a prefabricated plastic part.

11. Bus according to claim 1, **characterised in that** the interior (12) of the roof extension (4) is at least partially covered from above by one or more covers (15) applied at the top on the outer walls (6, 7).

12. Bus according to claim 1, **characterised in that** the interior (12) of the roof extension (4) has weather-protected subspaces in which vehicle parts and equipment to be protected against weather-related precipitation are installed, which subspaces are internally restricted at the front and rear by cross walls fastened between the outer walls (6, 7) and on the floor framework, at the top by applied covers (15) and at the bottom, after attachment of the roof extension (4) on the bus roof (2), by the latter, where each box produced in such a way can be hermetically sealed at the bottom towards the bus roof (2) and at the top between the cover (15) and component carrier (5) by means of inserted seals.

13. Bus according to one of the preceding claims, **characterised in that** the roof extension extends across the entire width and largely the entire length of the bus roof (2) and is applied with the undersides (13) of its outer walls (6, 7) on the outer areas of the bus roof (2) and is screwed onto the bus framework (3) situated underneath it.

14. Bus according to one of the preceding claims, **characterised in that** window-like areas (30) remain free in the floor framework (8) of the component carrier (5), into which areas a roof-based air conditioning unit (31) and/or roof hatch cover (32) can pass through or extend when the roof extension (4) is in the mounted position on the bus roof (2).

## Revendications

1. Autobus (1) avec un surélèvement de pavillon (4) à poser sur son pavillon (2), **caractérisé en ce que** le surélèvement de pavillon
a) présente un cadre porteur (5) universel, approximativement en forme de U dans sa section transversale, qui se compose de deux parois extérieures (6, 7) porteuses parallèles l'une par rapport à l'autre et une ossature de plancher (8) reliant celles-ci dans leur partie inférieure, auquel cas
aa) les parois extérieures (6, 7) sont, d'une part, conçues comme fonction porteuse, mais présentent, d'autre part, des surfaces visibles (6a, 7a) déjà adaptées au design du bus comme côtés extérieurs (6a, 7a),
ab) l'ossature de plancher (8) est formée de manière à stabiliser la fixation des deux parois extérieures (6, 7) ainsi que pour recevoir et fixer des pièces de véhicule (9, 10, 11),
ac) différentes pièces de véhicule ainsi que des carters intérieurs, des coffres, des réservoirs à ingrédient, des appareils de commande, des appareils de régulation et/ou d'autres appareils sont montées dans l'espace (12) situé entre les deux parois extérieures (6, 7) en fonction du type de bus (autobus au gaz, à l'hydrogène, à pile à combustible ou trolleybus) et son fixés indirectement sur l'ossature de plancher (8), et
b) est posé comme unité de construction prémontée et prête à monter avec le côté inférieur (13) de ses deux parois extérieures de cadre porteur (6, 7) - le cas échéant, callée à l'aide d'un joint d'étanchéité élastique - sur le pavillon de l'autobus (2) et fixé à cet endroit.

2. Autobus selon la revendication 1, **caractérisé en ce que** les parois extérieures (6, 7) du cadre porteur (5) sont fabriquées en profilé extrudé à chambre creuse, en particulier un profilé extrudé en aluminium.

3. Autobus selon la revendication 2, **caractérisé en ce que** le profilé extrudé à chambre creuse formant la paroi extérieure (6, 7) présente entre son côté extérieur (6a, 7a) et son côté intérieur (6c, 7c) plusieurs chambres creuses (6b, 7b) les unes au-dessus des autres, de préférence cinq chambres séparées entre elles par des parois intermédiaires, ainsi que, en dessous, une bride d'appui et de fixation (6d, 7d) dépassant la section transversale de la paroi vers l'intérieur dans la zone de la chambre creuse et, au dessus, une bride de support ou de raccordement (6e, 7e) dépassant également la section transversale de la paroi vers l'intérieur dans la zone de la chambre creuse pour recevoir un ou plusieurs couvercles (15).

4. Autobus selon l'une des revendications 1 à 3, **caractérisé en ce que** l'ossature de plancher du cadre porteur (8) présente plusieurs traverses (16) fabriquées de préférence en profilés extrudés en aluminium et fixées sur les côtés intérieurs (6c, 7c) des parois extérieures du cadre porteur (6, 7) à leurs deux extrémités respectives via des supports en équerre adaptés (17).

5. Autobus selon la revendication 5, **caractérisé en ce que** les traverses (16) de l'ossature de plancher du cadre porteur (8) sont reliées les unes aux autres pour des cas d'application définis par le biais de traverses longitudinales fabriquées de préférence également en profilés extrudés en aluminium et les traverses (16) servent d'organes de support et de fixation pour les pièces de véhicule (9, 10, 11) à monter dans l'espace intérieur du cadre porteur (12), telles que des réservoirs à ingrédient, des coffres pour appareil et des éléments semblables.

6. Autobus selon l'une des revendications 1 à 5, **caractérisé en ce qu'**un profilé en équerre s'étend le long du côté intérieur d'une paroi extérieur (6, 7), ce profilé formant du côté supérieur un marchepied (23a) et délimitant autrement un conduit pour loger les câbles électriques et/ou les conduites de gaz et d'ingrédient posés en dessous de lui du côté intérieur, ainsi que fixé en dessous à l'aide d'une bride (23c) disposée sur son montant vertical (23b) sur l'ossature de plancher (8) et au-dessus à l'aide d'une bride disposée à l'extérieur sur son marchepied (23a) soit sur le côté intérieur de la paroi extérieure (6c, 7c), soit sur le côté intérieur des supports en équerre (17) affectés spatialement.

7. Autobus selon les revendications 3 et 4, **caractérisé en ce que** les supports en équerre (17) sont fixés en appui sur la bride d'appui et de fixation (6d, 7d) de la paroi extérieure respective (6, 7) et l'ossature de plancher (8) possède par conséquent une certaine distance par rapport au pavillon du bus (2) lorsque le surélèvement de pavillon (4) est monté.

8. Autobus selon l'une des revendications mentionnées précédemment, **caractérisé en ce que** des éléments d'adaptation (19) sont posés sur les longerons et/ou les traverses (16, 18) de l'ossature de pavillon (8) pour assurer un appui adapté à la forme des pièces de véhicule à fixer, telles que des réservoirs à ingrédient, des coffres pour appareil et des éléments similaires.

9. Autobus selon la revendication 1, **caractérisé en ce que** le cadre porteur (5) est complété à l'avant par une paroi frontale (26) qui relie les deux parois extérieures (6, 7) et est formée de préférence d'une pièce préfabriquée en matière plastique ainsi que conçue de manière aérodynamique selon la forme d'un déflecteur.

10. Autobus selon la revendication 1, **caractérisé en ce que** le cadre porteur (5) est complété à l'arrière par une paroi frontale (27) qui relie les deux parois extérieures (6, 7) et est formée de préférence d'une pièce préfabriquée en matière plastique.

11. Autobus selon la revendication 1, **caractérisé en ce que** l'espace intérieur (12) du surélèvement de pavillon (4) est recouvert à partir du dessus au moins partiellement d'un ou de plusieurs couvercles (15) posés au-dessus sur les parois extérieures (6, 7).

12. Autobus selon la revendication 1, **caractérisé en ce que** l'espace intérieur (12) du surélèvement de pavillon (4) présente des espaces partiels protégés contre les intempéries, dans lesquels sont montées des pièces et des appareils de véhicule à protéger contre des précipitations atmosphériques, ces espaces partielles étant délimités à l'intérieur à l'avant et à l'arrière par des parois transversales fixées entre les parois extérieures (6, 7), par exemple, sur l'ossature de plancher, au-dessus par des couvercles (15) posés et en dessous par le pavillon de bus (2) après pose du surélèvement de pavillon (4) sur le pavillon de bus (2), auquel cas chaque coffre résultant de cette manière peut être étanchéifié hermétiquement en dessous par rapport au pavillon du bus (2) et au-dessus entre le couvercle (15) et le cadre porteur (5) par des joints d'étanchéité intercalés.

13. Autobus selon l'une des revendications mentionnées précédemment, **caractérisé en ce que** le surélèvement de pavillon s'étend sur toute la largeur et pour l'essentiel sur toute la longueur du pavillon du bus (2), et est posé sur les zones extérieures du pavillon de bus (2) à l'aide des côtés inférieurs (13) de ses parois extérieures (6, 7) et vissé à l'aide de l'ossature de bus (3) se trouvant en dessous.

14. Autobus selon l'une des revendications mentionnées précédemment, **caractérisé en ce que** des zones de type fenêtre (30) restent libres dans l'ossature de plancher (8) du cadre porteur (5) et peuvent accueillir à l'intérieur ou à travers elles une climatisation (31) côté pavillon et/ou des caches de trappe de pavillon (32) lorsqu'un surélèvement de pavillon (4) se trouve en position montée sur le pavillon de bus (2).
